# FASCICULE DE BREVET EUROPEEN

(11) **EP 1 688 633 B1**
(45) Date de publication et mention de la délivrance du brevet: **03.12.2008**
(21) Numéro de dépôt: 06300093.9
(22) Date de dépôt: 31.01.2006
(51) Int. Cl.: F16D 23/06

(54) **Dispositif de synchronisation à rattrapage de garde d'usure**
Synchronisiervorrichtung mit Nachstellung der Verschleißüberwachung
Synchroniser device with wear control adjustment

(30) Priorité: 08.02.2005 FR 0550354
(43) Date de publication de la demande: 09.08.2006
(73) Titulaire: RENAULT S.A.S., 92100 Boulogne Billancourt (FR)
(72) Inventeur: Garnier, Nicolas, 77680, ROISSY EN BRIE (FR)

(56) Documents cités:
- DE-C1- 19 646 850
- GB-A- 1 453 277
- US-A- 4 712 662
- US-A- 4 817 773

## Description

La présente invention se rapporte au domaine des synchroniseurs de vitesse pour boîtes de vitesses mécaniques à arbres parallèles et à engrenages.

Cette invention trouve application dans des synchroniseurs à un ou plusieurs anneaux de synchronisation.

Elle a pour objet un dispositif de synchronisation comportant un baladeur coulissant sur un moyeu fixé sur un arbre de boîte de vitesses en direction d'un pignon fou, dont la denture s'engage entre les crabots du pignon fou dans une phase de crabotage pour lier en rotation l'arbre et le pignon, après avoir traversé les dents d'au moins un anneau de synchronisation dans une phase de synchronisation des vitesses de rotation de l'arbre et du pignon.

De façon classique, un anneau de synchronisation présente des dents axiales et une surface conique de frottement venant en appui contre une surface correspondante du pignon sous la poussée du baladeur pendant la phase de synchronisation. A l'issue de celle-ci, les dents du baladeur traversent celles de l'anneau, et poursuivent leur déplacement en direction des crabots du baladeur, au cours d'une phase dite de « vol libre », précédant le crabotage.

Dans la phase de crabotage du passage de vitesse, il se produit un choc latéral entre les crabots du pignon fou et les dents du baladeur, lié a la désynchronisation de ces deux pièces pendant le vol libre, où les dents du baladeur parcourent la distance séparant l'anneau, ou les anneaux de synchronisation, des crabots du pignon.

Plus la distance à parcourir par les dents du baladeur pendant le vol libre est courte, plus elles atteignent rapidement le pignon fou, donc moins la désynchronisation du pignon est importante. Pour optimiser le fonctionnement d'un synchroniseur, il est nécessaire de réduire le plus possible cette distance.

Dans les conceptions de synchroniseur connues, notamment illustrées par la publication DE 1964 6850, et la publication US 4 712 662, la distance de vol libre » inclut toujours une garde d'usure de l'anneau de synchronisation. Une telle garde est nécessaire, pour que l'anneau ne rencontre pas radialement le flanc du pignon avant la fin de la synchronisation lorsque sa surface conique de frottement aura subi une usure prévisible. Selon cet état de la technique, la « garde d'usure » de l'anneau à l'état neuf est indispensable, aussi minime soit-elle.

Pour réduire au minimum (et non supprimer) la garde d'usure de l'anneau et le vol libre, il a déjà été proposé de limiter le phénomène d'usure en utilisant des matériaux plus résistants, ou d'empiler plusieurs anneaux de synchronisation dans des synchroniseurs, ou « double cône », dont la dilatation des anneaux de synchronisation est favorable à la réduction de la garde d'usure.

Toutefois, ces solutions, ne permettent pas de supprimer le « croquement » ressenti désagréablement par le conducteur sur la boule de son levier de vitesses, par exemple lors du passage en deuxième et en troisième. Elles peuvent même être à l'origine du « collage » des anneaux sur certains passages.

Pour supprimer le croquement, et les risques de collage, l'invention propose que le pignon fou présente des dentures axiales et une rondelle crabot coulissant sur celle-ci sous la poussée du baladeur, pour rattraper automatiquement la garde d'usure de l'anneau.

Conformément à l'invention, le coulissement d'une rondelle crabot sur des cannelures liées au pignon fou permet de rattraper automatiquement la garde ménagée ordinairement pour l'usure de l'anneau de synchroniseur.

Par ailleurs, le retour en position de la rondelle crabot peut être assuré par un ressort de rappel, et un arrêt axial.

De préférence, les crabots du pignon fou sont portés par la rondelle, le ressort est en appui contre des faces de l'anneau et du pignon.

Enfin, cette invention s'applique dans des mêmes conditions analogues sur un synchroniseur « simple cône », « double cône », et « triple cône ».

D'autres caractéristiques et avantages de l'invention apparaîtront clairement à la lecture de la description suivante d'un mode de réalisation non limitatif de celle-ci, en se reportant aux dessins annexés, sur lesquels :
- les figures 1, 2, et 3 montrent le dispositif proposé, respectivement au point mort, en phase de synchronisation, et en position de vitesse engagée, et
- la figure 4 illustre une variante de l'invention.

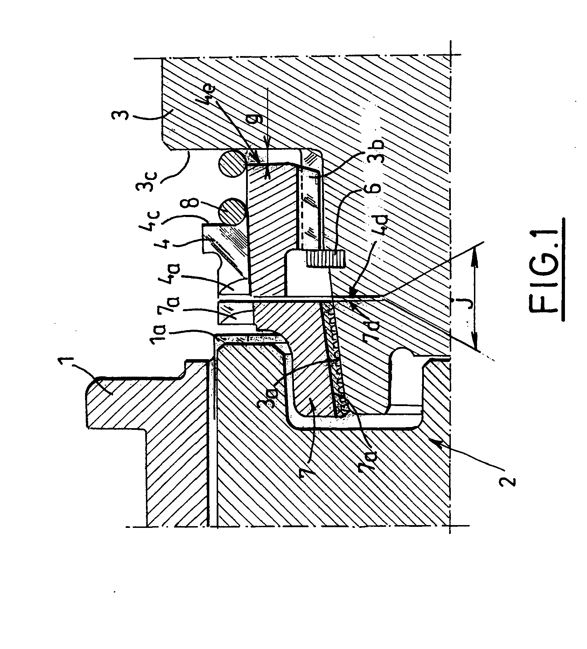

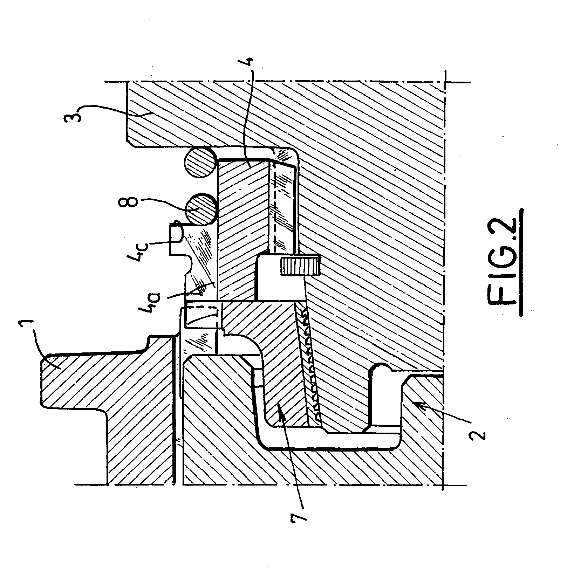

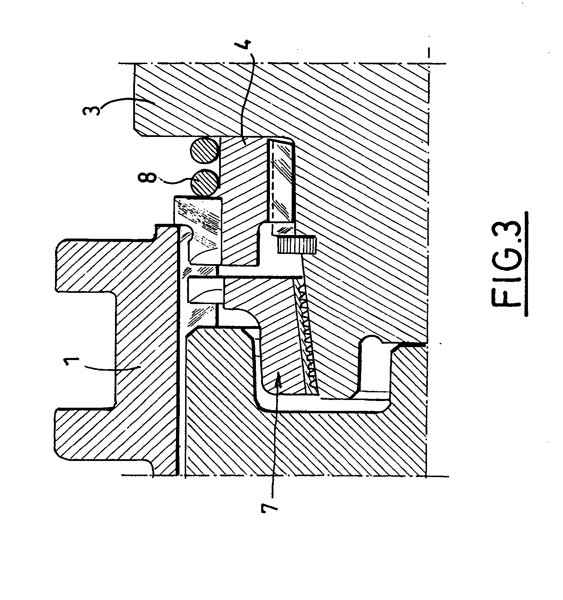

Le dispositif de synchronisation proposé comporte de façon classique un baladeur 1 coulissant sur un moyeu 2, qui est fixé sur un arbre de boîte de vitesses (non représenté). Sous la commande d'une fourchette de passage de vitesses (non représentée), le baladeur 1 coulisse à l'écart de sa position de point mort (figure 1) en direction d'un pignon fou 3. La denture la du baladeur s'engage entre les crabots 4a du pignon fou 3 dans une phase de crabotage pour lier en rotation l'arbre et le pignon 3 après avoir traversé les dents 7a d'au moins un anneau de synchronisation 7 dans une phase de synchronisation des vitesses de rotation de l'arbre et du pignon (figure 2), avant leur crabotage en position de rapport engagé (figure 3). L'anneau 7 et le pignon 3 présentent deux surfaces coniques de frottement complémentaires 7a, 3a. conformément à l'invention, le pignon 3 présente en plus des cannelures axiales 3b, et une rondelle crabot 4, coulissant sur celles-ci sous la poussée du baladeur 1, pour rattraper automatiquement la garde d'usure « g » de l'anneau 7 lors de la synchronisation.

Les crabots 4a du pignon fou 3 sont portés par la rondelle 4, et le rappel en position de la rondelle est assuré par un ressort 8 , en appui contre des faces 4c, 3c, de la rondelle 4 et du pignon 3.

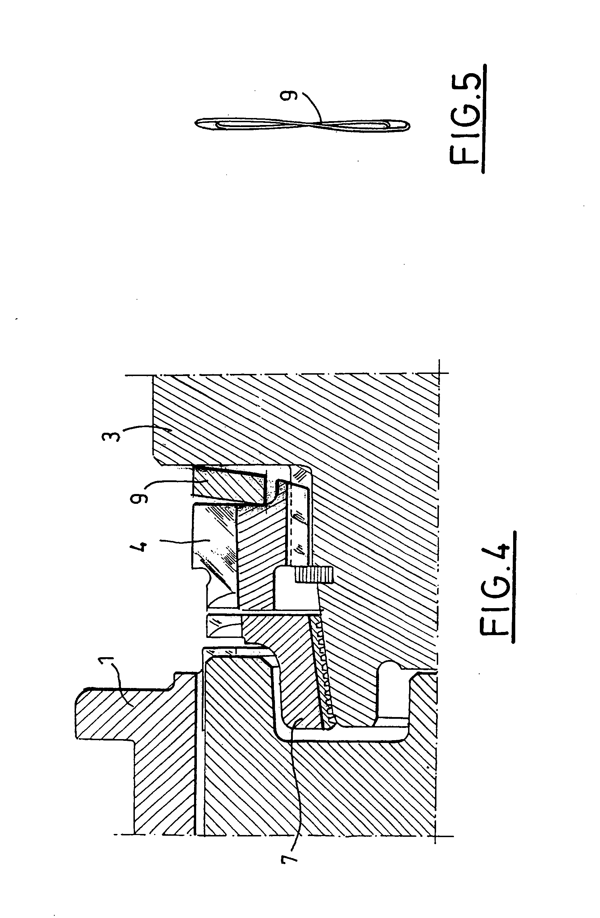

Dans le mode de réalisation des figures 1 à 3, on a représenté en coupe un ressort hélicoïdal 8, assurant donc le rappel de la rondelle crabot 4, à l'écart du pignon 3, contre un anneau d'arrêt 6. Selon la variante de la figure 4, le ressort est une rondelle ondulée, par exemple une « rondelle Belleville » 9, disposant des mêmes appuis que le ressort hélicoïdal. Toutefois, sans sortir du cadre de l'invention, on peut aussi utiliser tout autre type de ressort.

La figure 1 (position de point mort) montre un léger jeu « j », entre l'anneau 7 et la rondelle 4, qui correspond à un simple décollement de ces éléments, et n'existe pas sur la figure 2 (phase de synchronisation) où l'anneau 7 repousse la rondelle4 sous la poussée du baladeur 1. Enfin, sur la figure 3 (vitesse engagée) l'anneau 7 qui n'est plus sollicité par le baladeur, est à nouveau décollé de la rondelle 4.

Par ailleurs, l'écart « g » entre la face arrière 4c de la rondelle et la face 3c du pignon, qui correspond à la garde d'usure de l'anneau de synchronisation, est moindre en phase de synchronisation qu'au point mort, et a disparu lorsque la vitesse est engagée (figure 3).

Ainsi, la garde d'usure « g » de l'anneau de synchronisation, est prévue au montage entre la rondelle 4 la face latérale 3c du pignon, et non entre l'anneau et le pignon comme dans les synchroniseurs de l'état de la technique. Au point mort, la face 7d de l'anneau 7est à proximité d'une face latérale 4d de la rondelle 4, sans être entre en contact avec celle-ci

Le principe de fonctionnement du dispositif est le suivant. La rondelle crabot 4 est mobile axialement sur le pignon fou 3 sur les cannelures 3b. Au point mort, la rondelle 4 est maintenue plaquée axialement sur l'anneau d'arrêt 6, par le système de rappel (ressort hélicoïdal 8 ou rondelle ondulée 9) s'appuyant sur une face 3c du pignon fou et sur une face4c de la rondelle crabot. L'anneau de synchronisation est libre axialement.

En s'écartant du point mort (figure 1), le baladeur 1 s'appuie sur les entrées de denture 7a de l'anneau de synchro 7, pendant la phase de synchronisation (figure 2) : la face arrière 7d de l'anneau vient en contact avec la face avant 4d de la rondelle 4. Dans cette phase de synchronisation, le cône 7a de l'anneau de synchronisation 7 est décollé du cône 3a du pignon fou 3. Le baladeur 1 entraîne alors l'anneau 7 axialement jusqu'à l'immobilisation relative des surfaces coniques de frottement 7a, 3u, pour établir la synchronisation de l'arbre et du pignon.

Simultanément, le baladeur 1 repousse la rondelle crabot 4, qui coulisse sur ses cannelures 3b en comprimant en même temps le ressort 8 (ou la rondelle ondulée 9).

De façon classique, lorsque la synchronisation est établie, les dents 1a du baladeur repoussent latéralement les dents 7a de celles de l'anneau, au cours d'une phase de dévirage, pour traverser celles-ci. En fin de dévirage, le ressort 8, 9 se détend, et repousse l'anneau 7 à l'écart du cône du pignon fou, réduisant ainsi le couple de décollement nécessaire à la libération angulaire de l'anneau de synchronisation par rapport au baladeur.

La phase de vol libre, qui suit le dévirage, est considérablement réduite par rapport à un synchroniseur conventionnel, puisque la garde d'usure « g » (d'ordinaire positionnée entre la face arrière de l'anneau de synchronisation et la face du crabot du pignon fou) est ici placée entre la face arrière 4e de la rondelle crabot, et la face 3c du pignon.

Lors du crabotage, le ressort a de nouveau un effet bénéfique, puisqu'il aide à l'insertion des dents 1a du baladeur dans les crabots 4a du pignon fou, en réalité portés par la rondelle 4. Lorsque le rapport est engagé, le baladeur 1 poursuit sa course au travers des crabots 4a, et vient plaquer la rondelle crabot 4 en butée sur sa face arrière 4e, contre le pignon fou 3. Le baladeur 1 transmet ainsi normalement le couple, de la rondelle crabot 4 vers le moyeu 2. Le ressort exerce en plus un effort pour lutter contre les sauts de vitesses, puisqu'il a tendance à plaquer le baladeur sur le pignon fou.

Dans la variante de la figure 4, la rondelle ondulée 9, ou « rondelle Belleville », qui remplace le ressort 8, remplit la même fonction que celui-ci, à savoir le rappel axial de la rondelle crabot en butée sur l'anneau d'arrêt.

La description ci-dessus se rapporte à un synchroniseur simple cône. Toutefois, elle n'est pas limitative à cet égard, puisque l'invention s'applique dans des conditions analogues sur un synchroniseur du type « double cône », présentant deux anneaux de synchronisation, et sur un synchroniseur du type « triple cône », présentant trois anneaux de synchronisation.

Les avantages du dispositif proposé sont nombreux. En premier lieu, le phénomène de « croquement » est réduit par la disparition presque totale du vol libre, grâce au fait que la garde d'usure est rattrapée automatiquement par le ressort de rappel.

L'invention a aussi des effets positifs supplémentaires, tels que l'amélioration des problèmes de collage par action axiale du ressort dans la phase de dévirage, et l'assistance contre le saut de vitesse en rapport engagé, du fait que l'effort du ressort plaque alors le baladeur sur le pignon fou.

Enfin, lorsque l'anneau de synchronisation est usé, le dispositif de synchronisation fonctionne dans les mêmes conditions qu'à l'état neuf, car la garde d'usure est rattrapée automatiquement quelle que soit le degré d'usure du ou des cônes du synchroniseur.

## Revendications

1. Dispositif de synchronisation comportant un baladeur (1) coulissant sur un moyeu (2) fixé sur un arbre de boîte de vitesses en direction d'un pignon fou (3), dont la denture (1a) s'engage entre les crabots (4a) du pignon fou dans une phase de crabotage pour lier en rotation l'arbre et le pignon, après avoir traversé les dents (7a) d'au moins un anneau de synchronisation (7) dans une phase de synchronisation des vitesses de rotation de l'arbre et du pignon avant leur crabotage, **caractérisé en ce que** le pignon fou (3) présente des cannelures axiales (3b) et une rondelle (4) qui porte les crabots de celui-ci, mobile axialement sur les cannelures (3b) sous la poussée du baladeur (1) et d'un ressort de rappel en position (8, 9) pour rattraper automatiquement la garde d'usure (g) de l'anneau (7).

2. Dispositif de synchronisation selon la revendication 1, **caractérisé en ce que** le ressort (8, 9) est en appui contre des faces (4c, 3c) de l'anneau et du pignon (3).

3. Dispositif de synchronisation selon la revendication 1 ou 2, **caractérisé en ce que** la garde d'usure (g) de l'anneau (7) est prévue au montage entre la rondelle (4) et une face (3c) du pignon (3).

4. Dispositif de synchronisation selon la revendication 1, 2 ou 3, **caractérisé en ce que** au point mort, l'anneau (7) est à proximité d'une face latérale (4d) de la rondelle (4), sans être en contact avec celle-ci.

5. Dispositif de synchronisation selon l'une des revendications précédentes, **caractérisé en ce que** le ressort de rappel (8) est hélicoïdal.

6. Dispositif de synchronisation selon l'une des revendications 1 à 4, **caractérisé en ce que** le ressort est une rondelle ondulée (11).

7. Dispositif de synchronisation selon l'une des revendications précédentes, **caractérisé en ce qu'**il ne présente qu'un seul anneau (7) de synchronisation.

8. Dispositif de synchronisation selon l'une des revendications 1 à 6, **caractérisé en ce qu'**il est du type double cône, présentant deux anneaux de synchronisation (7).

## Claims

1. Synchronizing device comprising a sliding sleeve (1) which slides on a hub (2), fixed to a gearbox shaft, in the direction of an idling pinion (3) and whose toothing (1a) engages between the dogs (4a) of the idling pinion in a coupling phase so as to connect the shaft and the pinion in rotation, after having crossed the teeth (7a) of at least one synchronizing ring (7) in a phase of synchronizing the speeds of rotation of the shaft and the pinion prior to their coupling, **characterized in that** the idling pinion (3) has axial splines (3b) and a washer (4) which bears the dogs of this pinion and which can move axially on the splines (3b) under the thrust of the sliding sleeve (1) and of a position-return spring (8, 9) in order to automatically accommodate the wear margin (g) for the ring (7).

2. Synchronizing device according to Claim 1, **characterized in that** the spring (8, 9) bears against faces (4c, 3c) of the ring and of the pinion (3).

3. Synchronizing device according to Claim 1 or 2, **characterized in that** the wear margin (g) for the ring (7) is provided on mounting between the washer (4) and a face (3c) of the pinion (3).

4. Synchronizing device according to Claim 1, 2 or 3, **characterized in that,** in the neutral position, the ring (7) is in the vicinity of a lateral face (4d) of the washer (4), without being in contact with it.

5. Synchronizing device according to one of the preceding claims, **characterized in that** the return spring (8) is helical.

6. Synchronizing device according to one of Claims 1 to 4, **characterized in that** the spring is a corrugated washer (11).

7. Synchronizing device according to one of the preceding claims, **characterized in that** it has only one synchronizing ring (7).

8. Synchronizing device according to one of Claims 1 to 6, **characterized in that** it is of the double cone type, having two synchronizing rings (7).

## Patentansprüche

1. Synchronisationsvorrichtung, mit einem Schieberad (1), das auf einer Nabe (2), die an einer Getriebewelle befestigt ist, in Richtung eines beweglichen Ritzels (3) gleitet und dessen Zahnung (1a) mit den Klauen (4a) des beweglichen Ritzels in einer Einrastphase in Eingriff gelangt, um die Welle und das Ritzel drehfest zu verbinden, nachdem sie die Zähne (7a) wenigstens eines Synchronisationsrings (7) in einer Synchronisationsphase der Drehgeschwindigkeiten der Welle und des Ritzels vor ihrem Einrasten durchquert hat, **dadurch gekennzeichnet, dass** das bewegliche Ritzel (3) versehen ist mit axialen Rinnen (3b) und einer Scheibe (4), die seine Klauen trägt und in den Rinnen (3b) unter dem Schub des Schieberings (1) und einer Positionsrückstellfeder (8, 9) axial beweglich ist, um den Verschleißabstand (g) des Rings (7) automatisch nachzustellen.

2. Synchronisationsvorrichtung nach Anspruch 1, **dadurch gekennzeichnet, dass** die Feder (8, 9) an den Flächen (4c, 3c) des Rings und des Ritzels (3) anliegt.

3. Synchronisationsvorrichtung nach Anspruch 1 oder 2, **dadurch gekennzeichnet, dass** der Verschleißabstand (g) des Rings (7) zwischen der Scheibe (4) und einer Fläche (3c) des Ritzels (3) bei der Montage vorgesehen wird.

4. Synchronisationsvorrichtung nach Anspruch 1, 2 oder 3, **dadurch gekennzeichnet, dass** sich der Ring (7) in der Leerlaufstellung in der Nähe einer Seitenfläche (4d) der Scheibe (4) befindet, ohne mit dieser in Kontakt zu sein.

5. Synchronisationsvorrichtung nach einem der vorhergehenden Ansprüche, **dadurch gekennzeichnet, dass** die Rückstellfeder (8) schraubenlinienförmig ist.

6. Synchronisationsvorrichtung nach einem der Ansprüche 1 bis 4, **dadurch gekennzeichnet, dass** die Feder eine Wellenscheibe (11) ist.

7. Synchronisationsvorrichtung nach einem der vorhergehenden Ansprüche, **dadurch gekennzeichnet, dass** sie nur einen einzigen Synchronisationsring (7) aufweist.

8. Synchronisationsvorrichtung nach einem der Ansprüche 1 bis 6, **dadurch gekennzeichnet, dass** sie vom Doppelkonustyp ist und zwei Synchronisationsringe (7) aufweist.
